Europäisches Patentamt

European Patent Office

Office européen des brevets

(11) Publication number: **0 413 274 B1**

# EUROPEAN PATENT SPECIFICATION

(45) Date of publication of patent specification: **15.11.95**

(51) Int. Cl.⁶: **C08L 1/28**, //C08J3/05, C08K3:26

(21) Application number: **90115411.2**

(22) Date of filing: **10.08.90**

(54) **Aqueous suspension of hydroxyethylcellulose.**

(30) Priority: **18.08.89 US 395626**

(43) Date of publication of application:
**20.02.91 Bulletin 91/08**

(45) Publication of the grant of the patent:
**15.11.95 Bulletin 95/46**

(84) Designated Contracting States:
**AT BE CH DE ES FR GB IT LI NL SE**

(56) References cited:
EP-A- 0 002 368          EP-A- 0 003 582
EP-A- 0 039 128          FR-A- 2 600 267
US-A- 4 313 765          US-A- 4 318 746

CHEMICAL ABSTRACTS, vol. 109, no. 20, 14th
November 1988, page 279, abstract no.
174885b, Columbus, Ohio, US; & HU-A-44 711.

(73) Proprietor: **AOUALON COMPANY**
**2711 Centerville Road**
**Little Falls Centre One**
**Wilmington**
**Delaware 19850-5417 (US)**

(72) Inventor: **Zwartbol, Florus**
**P.O. Box Strobenbogerd 17**
**NL-3343 BT Hendrik Ido Ambacht (NL)**

(74) Representative: **Lederer, Franz, Dr. et al**
**Lederer, Keller & Riederer**
**Patentanwälte**
**Prinzregentenstrasse 16**
**D-80538 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention is directed to stable aqueous suspensions of water-soluble hydroxyethylcellulose, a process for preparing the same, and use of the same in a variety of applications.

### Background of the Invention

Water-soluble hydroxyethylcellulose (HEC) is a nonionic polymer useful in many industrial processes and consumer products. It has traditionally been handled in its dry, particulate form. Problems associated with dry HEC include undesirable dust generation, poor dispersibility when added to aqueous systems, and undesirably long dissolution times.

The dust associated with dry, particulate HEC presents the same conventional handling problems as are encountered with similar particulate materials. One major concern is the possibility of dust explosions.

HEC is hygroscopic and absorbs water from the air, which can cause particle agglomeration. Such agglomerated particles are very difficult, if not impossible, to disperse in an aqueous system.

When added to aqueous systems, HEC tends to agglomerate or form clumps. Agglomeration can be reduced in many cases by adding the HEC to the aqueous system slowly with agitation. Slow dissolution substantially reduces the speed of manufacturing operations.

For the above reasons, plant operators desire a fast, effective and simple way of incorporating HEC into an aqueous system. That is, users of HEC desire a stable, concentrated, HEC suspension that can be used to incorporate HEC in aqueous solutions readily, without formation of agglomerates or clumps, and which may be handled without the problems associated with dry powder HEC.

Girg et al., in U.S. Patent No. 4,283,229 and EP-A-3582 disclose that a stable suspension can be prepared by adding a nonionic, water-soluble cellulose ether derivative to a solution of 4 to 12% of an electrolyte if alumina is added to the suspension. Suitable electrolytes are described to include metal or ammonium salts of mineral acids or organic acids, especially salts which contain an alkali metal ion, an alkaline earth metal ion, an earth metal ion, or a zinc, copper, iron or manganese ion as the cation, and a sulfate, carbonate, silicate, sulfite, halide, phosphate, nitrate, nitrite, acetate, formate, tartrate, or citrate ion, including their hydrogen salts, as the anion. Examples V1 and V2 show dispersion of 25% by weight methylhydroxyethylcellulose using 28 and 20% by weight potassium carbonate, respectively.

EP-A-39128 discloses the suspension of a water-soluble polymer in an organic liquid nonsolvent suspending medium comprising an alcohol-soluble thickener like hydroxypropyl cellulose and one surfactant having a HLB between about 10 and 20.

From EP-A-2368 it is known to use a concentrate of a particulate polymer (e.g. ethylene oxide) in a water-insoluble organic vehicle such as a petroleum-based liquid hydrocarbon and a surfactant agent having a HLB in the range of 3 to 5 or 9 to 13 in order to dissolve the polymer in water.

FR-A-2600267 describes porous granules of biopolymers of the xanthan gum type.

The inventor has studied dispersion of HEC and discovered that high levels of this polymer can be dispersed in an aqueous system using the combination of levels of potassium carbonate, wetting agent, thickener and dispersing agent of this invention according to claim 1.

### Summary of the Invention

Accordingly, this invention is an aqueous suspension comprising 8 to 28%, by weight of the total suspension, of water-soluble hydroxyethylcellulose (HEC) dispersed in an aqueous solution comprising 20 to 35%, by weight of the total potassium carbonate and water, of potassium carbonate, 0.2 to 0.8%, by weight of the total suspension, of a wetting agent having a HLB of 6 to 9, and 0.08 to 0.6%, by weight of the total suspension, of a water-soluble or water-swellable thickener. The suspension further comprises 0.05 to 0.5% by weight of a dispersing agent having a HLB higher than 14. This invention is also directed to a process for preparing such a suspension and a process of preparing an aqueous solution of dissolved HEC using such a suspension.

### Detailed Description of the Invention

This invention is a stable, pourable fluid suspension containing high concentrations of water-soluble hydroxyethylcellulose (HEC).

"Suspension", "dispersion", "solution" and other terms are often confused. Thus, it should be understood that herein "suspension" and "dispersion" can be used interchangeably to mean a system in

2

which solid particles (HEC) are dispersed in a liquid (water). It should also be understood that "solution" means a homogenous mixture of a solvent (e.g., water) with a solute (e.g., dissolved potassium carbonate, dissolved HEC, etc.).

The HEC dispersed according to this invention is nonionic and water-soluble, e.g., such that the solution viscosity is on the order of 1,000 or more centipoise in a 5 weight percent aqueous HEC solution and in larger amounts, e.g., 10 weight percent, their aqueous solution viscosities are extremely high or they form a gel. For reasons of this very high viscosity, these polymers cannot normally be pumped or handled (dissolved) in aqueous media when their concentration exceeds 5 to 10 weight percent. Typically, the polymers of this invention have a hydroxyethyl molar substitution (number of hydroxyethyl groups per anhydroglucose unit) of about 1.0 to about 4.2, preferably about 1.8 to above 3.0. Suspensions according to this invention contain at least 8%, preferably 18 to 28%, and most preferably 22 to 26%, by weight of the total suspension, of the particulate HEC.

The HEC may be treated with aldehydes, such as glyoxal, but such a treatment is not essential for the purposes of the invention.

The aqueous solution comprises 20 to 35%, preferably 25 to 33%, and most preferably 29 to 32%, by weight of the total potassium carbonate and water, of potassium carbonate. The desired concentration of potassium carbonate in water varies with the hydroxyethylcellulose type and quantity.

Wetting agents are molecules which have both a hydrophilic and lipophilic character. Those useful in this invention have a hydrophile-lipophile balance (HLB) value in the range of 6 to 9. Wetting agents are sorbitan fatty acid esters (including polyoxyethylene sorbitan fatty acid esters) and polyoxyethylene nonylphenol esters. Illustrative are sorbitan monolaurate and blends thereof with polyoxyethylene sorbitan monolaurate (ratio of 20:80 to 0:100) or sorbitan monostearate (ratio of 40:60 to 0:100), sorbitan monopalmitate, lecithin and polyoxyethylene nonylphenol ether, with sorbitan monolaurate being most preferred. The wetting agent is used in an amount of 0.2 to 0.8%, based on the total weight of the suspension.

A water-soluble or water-swellable thickener (also known as a "suspending agent") is also useful to suspend hydroxyethylcellulose per this invention. Illustrative are bentonite, carboxy vinyl polymers (e.g. Carbopol[R] polymers, B. F. Goodrich, Cleveland, Ohio) and xanthan gum. Preferred is xanthan gum. Thickeners are generally used in an amount of 0.08 to 0.6%, preferably 0.14 to 0.25%, and most preferably 0.16 to 0.22%, based on the total weight of the suspension.

This suspension of this invention also contains dispersing agents, i.e., molecules with higher HLB values (generally HLB greater than 14). Dispersing agents are polyoxyethylene sorbitan fatty acid esters and alkali salts of polyacrylic acids, e.g., polyoxyethylene sorbitan monopalmitate, polyoxyethylene sorbitan monostearate, polyoxyethylene sorbitan monolaurate, and the sodium and ammonium salts of polyacrylic acid. Preferred are alkali salts of acrylic acid. Most preferred is the sodium salt of polyacrylic acid. Dispersing agents are used in an amount of 0.05 to 0.5%, by weight of the total suspension. Higher amounts, e.g., 0.08% or more, of polyoxyethylene sorbitan fatty acid esters are generally necessary for good appearance. Preferably, the dispersing agent is present in an amount of 0.1% or greater.

Other additives which can be used include pigments, dispersants, surfactants, glycols and thickening agents. These are generally used in amounts up to 10%, preferably 0.5 to 2%, based on the weight of the total suspension.

The suspensions of this invention can be prepared by dissolving the potassium carbonate in water to form an aqueous salt solution and, then, dispersing the HEC in this solution with agitation. The wetting agent may be added at any time, but is preferably added before the HEC is added to the salt solution. The thickener may be added at any time, but is preferably added after the potassium carbonate and before the HEC and wetting agent(s). The dispersing agent may be added at any time, but is preferably added after the HEC (as well as the salt, thickener and wetting agent). In the case where other additives are employed, these are typically added to the water before the salt.

By "stable" is meant that the dispersed phase (water-soluble hydroxyethylcellulose) and aqueous phase do not separate for some minimum time after preparation, or if separation does occur the hydroxyethylcellulose may be readily redispersed with a minor amount of agitation. Stability is a function of the type of hydroxyethylcellulose used, as well as the concentration of hydroxyethylcellulose, salt, etc. Suspensions per this invention have been found to be stable for long periods of time, e.g., after nine months. The stability of the suspensions of this invention can be further improved by mixing the dispersion in a vacuum, so as to remove entrained air. The prolonged stability of the suspensions of this invention permits their preparation at one location and transportation to another location where they are to be used.

The viscosity of the suspensions of this invention are relatively independent of the molecular weight (or solution viscosity) of the hydroxyethylcellulose in suspension. Instead, viscosity is proportional to the quantity of hydroxyethylcellulose present. Further, the suspension viscosity is inversely proportional to the potassium carbonate concentration. Consequently, to suspend larger amounts of HEC it is necessary to use larger potassium carbonate concentrations.

The HEC suspensions of this invention are useful in virtually all applications where dry water-soluble hydroxyethylcelluloses are presently used, the only limitation being that the potassium carbonates may not be desirable in some applications. The applications in which the dispersions of this invention may be used include, e.g., water clarification, mineral processing, food and pharmaceutical thickening, cosmetics thickening, agricultural products thickening, oil field applications, building products (e.g., joint cements), ceramics, latex paints, paper coatings, emulsion polymerization, suspension polymerization, carpet backing, etc. Advantages of using the high concentration HEC suspensions of this invention include the ability to control thickening action of the HEC (thickening time is reduced substantially), ease of handling and dosage control (automated addition of HEC is possible for many applications), avoidance of polymer dusting, avoidance of lumping etc.

The suspensions may be added to aqueous systems (e.g., aqueous solutions), by simply adding, e.g., pouring, the suspension into the aqueous system. Agitation enhances dissolution. The suspension may also be sprinkled, sprayed, etc., where desired for a specific end use.

This invention is demonstrated in the following examples, which are illustrative and not intended to be limiting, wherein all parts, percentages, etc., are by weight.

Example 1

In each instance an aqueous potassium carbonate solution was prepared by dissolving potassium carbonate in water. In the case where a wetting agent was used, it was added before the HEC. When a thickener was used it was added after the potassium carbonate and prior to the HEC and wetting agent. In the case where polyacrylic acid was added as a dispersing agent, it was added after the HEC. In the case where polyoxyethylene sorbitan monostearate was added as a dispersing agent, it was added with or after the HEC.

TABLE 1

| Sample | HEC[3]/% [1] | | Potassium Carbonate (%)[2] | Wetting Agent (%)[1] | | Thickener (%)[1] | | PAA[7](%)[1] | PSMS[8](%)[1] | Viscosity[4] (Milli Pascals) | Stability[5] |
|---|---|---|---|---|---|---|---|---|---|---|---|
| (A) | HXA | 8 | 25 | Sorbitan Monolaurate | 0.2 | Xanthan Gum | 0.50 | – | 0.02 | 1000 | Stability > 4 weeks |
| (B) | HHXA | 23 | 29 | " | 0.4 | " | 0.19 | 0.11 | 0.06 | 2800 | Stable for 9 months |
| (C) | HHXA | 26 | 30 | " | 0.4 | " | 0.15 | 0.11 | 0.07 | 5000 | Stable for 9 months |
| (D) | HHXA | 28 | 32 | " | 0.7 | " | 0.10 | 0.3 | 0.07 | 7000 | Stable > 1 month and < 4 months |
| (E) | HXA | 23 | 16 | " | 0.4 | " | 0.10 | – | 0.06 | HEC dissolves | Non-fluid |
| (F) | HHXA | 23 | 20 | " | 0.4 | " | 0.10 | 0.2 | 0.06 | 6000 | Stability > 3 months high viscosity |
| (G) | HHXA | 23 | 25 | " | 0.2 | " | 0.20 | 0.2 | 0.06 | 5800 | Stability > 3 months, high viscosity |
| (H) | HHXA | 23 | 29 | " | 0.2 | " | 0.20 | 0.2 | 0.06 | 4800 | Stability > 3 months |
| (I) | HHXA | 23 | 32 | " | 0.4 | " | 0.24 | 0.4 | 0.06 | 5800 | Stability > 3 months |
| (J) | HHXA | 26 | 35 | " | 0.4 | " | 0.15 | 0.4 | 0.07 | 2000 | Stability > 3 months |
| (K) | GX | 26 | 29 | " | 0.2 | " | 0.10 | – | 0.07 | 5800 | Stability > 3 months |
| (L) | MX | 26 | 29 | Lecithin | 0.2 | " | 0.15 | 0.2 | 0.07 | 6400 | Stability > 3 months |
| (M) | HHX | 26 | 30 | Sorbitan Monolaurate | 0.25 | " | 0.15 | 0.2 | 0.07 | 6700 | Stability > 3 months |
| (N) | HHX | 26 | 28 | " | 0.75 | " | 0.15 | – | 0.07 | 6400 | Stability > 3 months |
| (O) | HHX | 26 | 30 | – | – | " | 0.15 | 0.2 | 0.07 | 6000 | Stability > 3 months, Poor Appearance |

1) Percent, by weight of the total suspension.

2) Percent, by weight of the total potassium carbonate and water.

3) Type of HEC. L is low molecular weight, G is medium-low molecular weight, M is medium molecular weight, H is high molecular weight, and HH is extra high molecular weight. X means fine particle size. A means the HEC has been treated with an aldehyde.

4) Brookfield, LVT viscosity (Spindel #3, 30 rpm).

5) A suspension is stated to be stable if no sedimentation is observed (without mixing/agitation).

6) B. F. Goodrich, Cleveland, Ohio.

7) Sodium salt of polyacrylic acid.

8) Polyoxyethylene (20) sorbitan monostearate having an HLB value of 14.9.

TABLE 1 (cont.)

| Sample | HEC[3] (%)[1] | Potassium Carbonate (%)[2] | Wetting Agent (%)[1] | Thickener (%) | | PAA[7] (%)[1] | PSMS[8] (%)[1] | Viscosity[4] (Milli Pascals) | Stability[5] |
|---|---|---|---|---|---|---|---|---|---|
| (P) | MHXA 26 | 30 | Sorbitan Monolaurate 0.45 | Xanthan Gum | 0.19 | 0.11 | 0.07 | 2800 | Stable for 9 months |
| (Q) | MHXA 25 | 30 | " 0.45 | Carbopol[R] 94(6) | 0.6 | 0.11 | 0.06 | 3000 | Stable for 2 months |
| (R) | MHBXA 23 | 30 | " 0.20 | Xanthan Gum | 0.10 | 0.20 | 0.06 | 2200 | Stability for > 3 months |
| (S) | MXG 16 | 25 | " 0.60 | " | 0.5 | 0.20 | 0.04 | 1500 | Stability > 4 weeks |
| (T) | MHXA 25 | 30 | " 0.45 | - | - | 0.20 | 0.06 | 1000 | Not stable, two layer system |
| (U) | MXA 23 | 28 | " 0.7 | Xanthan Gum | 0.15 | 0.11 | 0.06 | 2500 | Stable for 9 months |
| (V) | LXA 23 | 28 | " 0.7 | " | 0.15 | - | 0.36 | 2400 | Stability > 1 month |
| (W) | LXA 23 | 28 | " 0.7 | " | 0.15 | - | 0.06 | 2600 | Stable, Poor Appearance |
| (X) | GXA 23 | 28 | " 0.7 | " | 0.15 | 0.05 | 0.06 | 2600 | Stability > 6 weeks |
| (Y) | GXA 23 | 28 | " 0.2 | " | 0.15 | 0.5 | 0.06 | 2300 | Stability > 6 weeks |
| (Z) | MXA 23 | 30 | - | " | 0.15 | - | - | 1800 | Stability > 3 months Poor Appearance |

1) Percent, by weight of the total suspension.
2) Percent, by weight of the total potassium carbonate and water.
3) Type of HEC. L is low molecular weight, G is medium-low molecular weight, M is medium molecular weight, H is high molecular weight, and HH is extra high molecular weight. X means fine particle size. A means the HEC has been treated with an aldehyde.
4) Brookfield, LVT viscosity (Spindle #3, 30 rpm).
5) A suspension is stated to be stable if no sedimentation observed.
6) B. F. Goodrich, Cleveland, Ohio.
7) Sodium salt of polyacrylic acid.
8) Polyoxyethylene (20) sorbitan monostearate having an HLB value of 14.9.

Most of the suspensions are stable upon storage. Exceptions are sample E which is caused by a too low salt content which results in dissolution of the HEC and sample T which is caused by the absence of a thickener.

Stable suspension can be obtained without the presence of a wetting agent and dispersing agent. However, such suspensions often have poor appearance (i.e., have a non-homogeneous apple sauce

6

appearance which causes pumping/metering problems).

Samples (O) and (Z) show that a wetting agent is required for good appearance.

The presence of a dispersing agent is not always required for good appearance (see, e.g., Samples (A) and (K)), but poor appearance may result where dispersing agent(s) are not used in sufficient amounts (see, e.g., Sample (W)).

<u>Example 2</u>

Solutions were prepared by adding 5g of suspensions prepared according to the process of Example 1 to 100g dilution water. The suspensions and polymers used, and results are shown in Table 2.

TABLE 2

| SOLUTIONS PREPARED FROM HEC SUSPENSIONS | | |
|---|---|---|
| Suspension Sample | Solution[1] of Sample No. | Viscosity |
| 1 | B | 5500 centipoise[2] |
| 2 | U | 1900 centipoise[3] |

[1]Brookfield LVT viscosity (30 rpm.).
[2]Spindle #4.
[3]Spindle #3.

It was observed that the suspensions of this invention dispersed and then thickened the water rapidly to form viscous solutions.

**Claims**

1. An aqueous suspension of a nonionic water-soluble hydroxyethylcellulose and salt, characterized in that the aqueous suspension comprises at least 8 to 28% by weight of the total aqueous suspension of water-soluble hydroxyethylcellulose dispersed in an aqueous solution comprising 20 to 35% by weight potassium carbonate based on total weight of potassium carbonate and water, 0.2 to 0.8% by weight of a wetting agent having a HLB of 6 to 9, which is selected from the group consisting of sorbitan fatty acid esters, polyoxyethylene nonylphenol esters, sorbitan monolaurate, lecithin, polyoxyethylene nonylphenol ether, sorbitan monostearate, sorbitan monopalmitate and blends of sorbitan monolaurate with polyoxyethylene sorbitan monolaurate, and 0.08 to 0.6% by weight of a water-soluble or water-swellable thickener both based on the weight of the total suspension, and further comprising 0.05 to 0.5% by weight of a dispersing agent having a HLB higher than 14, which is either an alkali salt of polyacrylic acid or an polyoxyethylene sorbitan fatty acid ester.

2. The aqueous suspension of claim 1, further characterized in that the thickener is selected from the group consisting of bentonite, carboxyvinyl polymers and xanthan gum.

3. A process for preparing an aqueous suspension of a nonionic water-soluble hydroxyethylcellulose and salt, characterized in that the process involves the steps:
   (A) preparing an aqueous potassium carbonate solution;
   (B) adding a water-soluble or water-swellable thickener and a wetting agent to the aqueous potassium carbonate solution;
   (C) dispersing a hydroxyethylcellulose in the aqueous solution to prepare an aqueous suspension; and
   (D) adding at any time a dispersing agent.

4. The process of claim 3, further characterized in that the dispersing agent such as an alkali salt of polyacrylic acid or an polyoxyethylene sorbitan fatty acid ester is added in an amount of 0.05 to 0.5% by weight based on the total weight of the aqueous suspension.

**Patentansprüche**

1. Wäßrige Suspension einer nichtionischen wasserlöslichen Hydroxyethylcellulose und Salz, dadurch gekennzeichnet, daß die wäßrige Suspension mindestens 8 bis 28 Gew.-% der gesamten wäßrigen Suspension wasserlösliche Hydroxyethylcellulose umfaßt, die dispergiert ist in einer wäßrigen Lösung umfassend 20 bis 35 Gew.-% Kaliumcarbonat basierend auf dem Gesamtgewicht von Kaliumcarbonat und Wasser, 0,2 bis 0,8 Gew.-% eines Benetzungsmittels mit einem HLG-(hydrophil-lipophilen Gleichgewichts-) Wert von 6 bis 9, das ausgewählt ist aus der Gruppe bestehend aus Sorbitanfettsäureestern, Polyoxyethylennonylphenolestern, Sorbitanmonolaurat, Lecithin, Polyoxyethylennonylphenolether, Sorbitanmonostearat, Sorbitanmonopalmitat und Mischungen aus Sorbitanmonolaurat mit Polyoxyethylensorbitanmonolaurat, und 0,08 bis 0,6 Gew.-% eines wasserlöslichen oder wasserquellenden Verdickers, beide basierend auf dem Gewicht der Gesamtsuspension, und weiterhin unfassend 0,05 bis 0,5 Gew.-% eines Dispersionsmittels mit einem HLG-Wert höher als 14, das entweder ein Alkalisalz der Polyacrylsäure oder ein Polyoxyethylensorbitanfettsäureester ist.

2. Wäßrige Suspension gemäß Anspruch 1, weiterhin dadurch gekennzeichnet, daß der Verdicker ausgewählt ist aus der Gruppe bestehend aus Bentonit, Carboxyvinylpolymeren und Xanthangummi.

3. Verfahren zur Herstellung einer wäßrigen Suspension einer nichtionischen wasserlöslichen Hydroxyethylcellulose und Salz, dadurch gekennzeichnet, daß das Verfahren die Schritte:
   (A) Herstellung einer wäßrigen Kaliumcarbonatlösung;
   (B) Zugabe eines wasserlöslichen oder wasserquellenden Verdickers und eines Benetzungsmittels zu der wäßrigen Kaliumcarbonatlösung;
   (C) Dispergierung einer Hydroxyethylcellulose in der wäßrigen Lösung zur Herstellung einer wäßrigen Suspension; und
   (D) Zugabe eines Dispersionsmittel zu jeder Zeit
   beinhaltet.

4. Verfahren gemäß Anspruch 3, weiterhin dadurch gekennzeichnet, daß das Dispersionsmittel wie beispielsweise ein Alkalisalz der Polyacrylsäure oder ein Polyoxyethylensorbitanfettsäureester in einer Menge von 0,05 bis 0,5 Gew.-% basierend auf dem Gesamtgewicht der wäßrigen Suspension zugegeben wird.

**Revendications**

1. Suspension aqueuse d'hydroxyéthylcellulose soluble dans l'eau et non ionique et de son sel, caractérisée en ce que la suspension aqueuse en question comprend au moins 8 à 28% en poids, par rapport à la suspension aqueuse totale, d'hydroxyéthylcellulose soluble dans l'eau, dispersée dans une solution aqueuse comprenant 20 à 35% en poids de carbonate de potassium, sur base du poids total du carbonate de potassium et de l'eau, 0,2 à 0,8% en poids d'un agent mouillant possédant une valeur HLB de 6 à 9, qui est choisi dans le groupe formé par les esters d'acides gras du sorbitan, les esters du polyoxyéthylènenonylphénol, le monolaurate de sorbitan, la lécithine, l'éther du polyoxyéthylènenonylphénol, le monostéarate de sorbitan, le monopalmitate de sorbitan et des mélanges de monolaurate de sorbitan et de monolaurate de polyoxyéthylènesorbitan, et 0,08 à 0,6% en poids d'un épaississant soluble dans l'eau ou gonflable à l'eau, tous deux sur base du poids de la suspension totale et comprenant, en outre, 0,05 à 0,5% en poids d'un agent dispersif possédant une valeur HLB supérieure à 14, qui est soit un sel de métal alcalin du poly(acide acrylique), soit un ester d'acide gras de polyoxyéthylènesorbitan.

2. Suspension aqueuse suivant la revendication 1, caractérisée en ce que l'épaississant est choisi dans le groupe formé par la bentonite, les polymères carboxyvinyliques et la gomme xanthane.

3. Procédé de préparation d'une suspension aqueuse d'une hydroxyéthylcellulose soluble dans l'eau et non ionique et de son sel, caractérisé en ce qu'il comprend les étapes consistant à :
   (A) préparer une solution aqueuse de carbonate de potassium;
   (B) ajouter un épaississant soluble dans l'eau ou gonflable à l'eau et un agent mouillant à la solution aqueuse de carbonate de potassium;

(C) disperser une hydroxyéthylcellulose dans la solution aqueuse pour préparer une suspension aqueuse, et

(D) ajouter à n'importe quel moment un agent dispersif.

4. Procédé suivant la revendication 3, caractérisé en ce que l'on ajoute l'agent dispersif, comme un sel de métal alcalin d'un poly(acide acrylique) ou un ester d'acide gras de polyoxyéthylènesorbitan, en une proportion de 0,05 à 0,5% en poids, sur base du poids total de la suspension aqueuse.